# EUROPÄISCHE PATENTSCHRIFT

(11) **EP 0 424 803 B1**
(45) Veröffentlichungstag und Bekanntmachung des Hinweises auf die Patenterteilung: **16.07.1997**
(21) Anmeldenummer: 90119988.5
(22) Anmeldetag: 18.10.1990
(51) Int. Cl.: G06F 17/40, G06K 9/00

(54) **Verfahren zur mindestens teilweisen Umsetzung von Bilddaten in Text mit Vorbereitung für nachfolgende Speicherung oder Weiterverarbeitung**
Method for at least partially transforming image data into text with provision for subsequent storage or further processing
Méthode de transformation au moins partielle de données d'image en texte avec préparation pour stockage ou traitement ultérieure

(30) Priorität: 24.10.1989 US 426035; 13.08.1990 US 565983
(43) Veröffentlichungstag der Anmeldung: 02.05.1991
(73) Patentinhaber: FROESSL, Horst, D-69502 Hemsbach (DE)
(72) Erfinder: FROESSL, Horst, D-69502 Hemsbach (DE)
(74) Vertreter: Frei, Alexandra Sarah

(56) Entgegenhaltungen:
- EP-A- 0 202 671
- WO-A-84/04864

## Beschreibung

Die Erfindung betrifft ein Verfahren zur mindestens teilweisen Umsetzung von Bilddaten mit Vorbereitung für nachfolgende Speicherung oder Weiterverarbeitung.

Verfahren zur Umsetzung oder teilweisen Umsetzung von in digital codierter Form vorliegenden, mindestens teilweise Text enthaltenden Bildern in digital codierten Text sind bekannt. Es ist auch bekannt, diese Umsetzung auf am Bildschirm ausgewählte Textteile zu beschränken (US-A-4 553 261). Bei allen bekannten Verfahren wird aus der Bilddatei eine Textdatei erzeugt, ohne dass weitere Beziehungen zwischen diesen Dateien festgehalten würden. Dadurch ist es nicht möglich, etwa bei vollständiger Umsetzung einer Seite, wie sie von den meisten Programmen durchgeführt wird, durch der Umsetzung vorausgehende oder vorauseilende Markierung von Bildteilen Teile des nachfolgend umgesetzten Textes herauszuheben und für bestimmte Zwecke wie z. B. Aufnahme in eine Deskriptorenliste zu markieren. Ebensowenig ist es möglich, nach Abspeicherung von Bild und Text in einem Massenspeicher ausgehend vom leicht nach Stichwörtern oder bestimmten Symbolen durchsuchbaren Text zugehörige Bilddaten aufzufinden.

Eine frühere Entwicklung des gleichen Erfinders auf dem technischen Gebiet ist in der **WO-A-84'04'864** beschrieben. Eine Vorrichtung zum Einlesen, digitalisieren und Speichern von Bildern, bspw. die Graphik eines Briefkopfes, ermöglicht die spätere Identifizierung dieser Graphik über einen dieser Graphik zugeordneten Code. Mit diesem Dokumentenmerkmal lassen sich zugehörige, gespeicherte Dokumente rasch wieder auffinden. In einer weiteren Druckschrift, **EP-A-0'202'674** ist ein Verfahren zum Speichern von Memos, die ein Benutzer einem Dokument zugefügt hat. Das Memo liegt in Textform vor und ist durch Schlüsselworte abrufbar. Auf diese Weise wird eine Art thesauerierte Verbindung zu einem Dokument hergestellt, wodurch es sich ebenfalls rasch wieder auffinden lässt.

Hier wird durch die Erfindung, wie sie in den Ansprüchen definiert ist, ein weites Feld von praktisch sehr wertvollen Möglichkeiten eröffnet. Der Umsetzung vorauseilende Markierung von Textsequenzen ist ebenso möglich wie der von einer umgesetzten Textsequenz ausgehende Rückruf des Urbildes etwa zu Kontrollzwecken oder auch benachbarter nicht umsetzbarer Bildteile aus dem Massenspeicher.

Weitere Anwendungsmöglichkeiten werden aus der Beschreibung deutlich werden, in der auch ein zur Durchführung des Verfahrens geeignetes System ausführlich beschrieben wird.

Im folgenden wird die Erfindung anhand von lediglich ein Ausführungsbeispiel darstellenden Zeichnungen näher erläutert. Es zeigen
- Fig. 1: schematisch ein Blockdiagramm eines Eingabesystems für das erfindungsgemässe Datenbanksystem,
- Fig. 2: schematisch eine Draufsicht auf eine Steuer- und Prozessorkarte, wie sie im System nach Fig. 1 benutzt wird und
- Fig. 3A,B: in zwei Teilen ein Flussdiagramm zur Illustration des erfindungsgemässen Verfahrens.

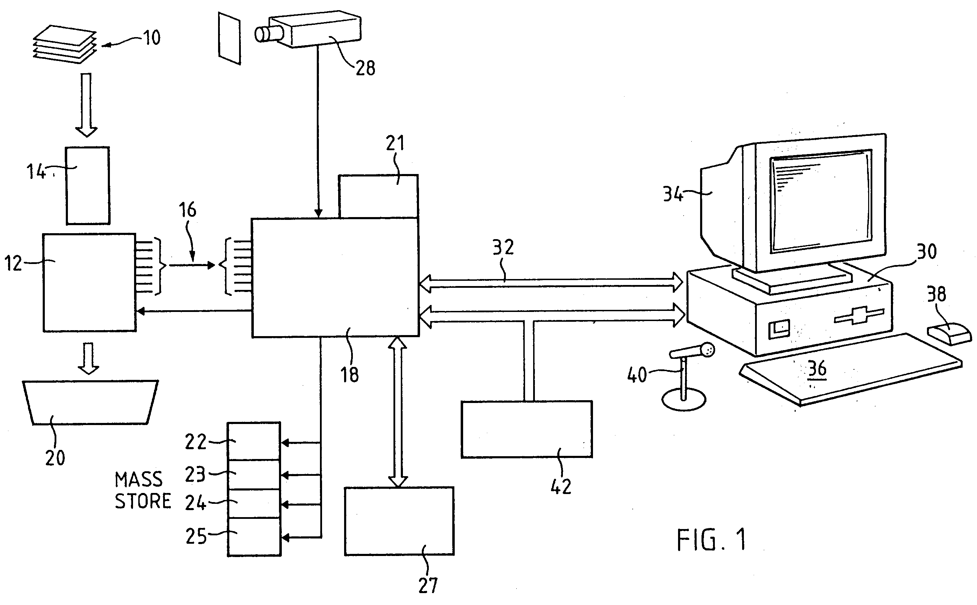

In Fig. 1 wird eine Folge von Quelldokumenten 10 entweder manuell oder mittels eines Zuführgerätes 14 einem optischen Scanner 12 ähnlich den in Photokopiergeräten verwendeten zugeleitet. In manchen Fällen kann es nötig sein, Dokumente ungewöhnlichen Formats, bevor sie dem Zuführgerät 14 zugeleitet werden, auf Papier von Normformat umzukopieren. Das Zuführgerät 14 führt die Dokumente eins nach dem andern dem Scanner 12 zu, welcher sie abtastet und elektrische Signale erzeugt, die auf mehreren Leitungen 16 einer Kompressionskarte 27 zugeleitet werden, die die Bilddaten komprimiert, bevor sie schliesslich in Massenspeichern 22 - 25 gespeichert werden. Die selbe Karte wird normalerweise auch zur Dekompression der Daten beim Abruf derselben gebraucht, wobei im Prinzip der gleiche Algorithmus verwendet wird wie für die Kompression. Durch die Kompression ergibt sich keine wesentliche Aenderung der Geschwindigkeit, mit der die Daten gespeichert werden, dagegen ist die Einsparung von Speicherplatz bedeutend. Eine geeignete Karte ist z. B. der PROSCAN High Speed Document Processor (V. 1.4) der Firma Systemaat B.V., A. Paulownastraat 7, 3331 AA Zwyndrecht, Holland. Die abgetasteten Dokumente werden in einer Ablage 20 abgelegt, von wo sie einem Archiv zugeführt werden oder sonst über sie disponiert wird.

Der gesamte Prozess der Zeichenerkennung, von welchem der Scanner 12 einen ersten Schritt ausführt, umfasst im allgemeinen drei Schritte. Der erste besteht in der Abtastung oder elektro-optischen Umsetzung, bei welcher elektrische Signale, die die Helligkeit einzelner Bereiche des Quelldokuments darstellen, erzeugt werden. Es sind mindestens drei verschiedene Abtastmethoden in allgemeinem Gebrauch. Diese Bildsignale werden dann einem Aufbereitungsschritt unterworfen, in welchem sie in eine Form umgewandelt werden, in der sie von Erkennungslogik oder Zeichenerkennungsprogrammen verarbeitet werden können. Dabei werden die vom Scanner gelieferten Analogsignale in digitale Signale umgewandelt, eventuell werden auch bereits Merkmale detektiert. Ausserdem kann die Aufbereitung auch Rauschunterdrückung einschliessen. Die Aufbereitung kann im Scanner geschehen, d. h. der Scanner kann mit Aufbereitungsschaltungen versehen sein, aber meist wird sie durch separates Gerät ausgeführt.

Schliesslich wird die Erkennung mittels spezieller Schaltungen oder Programme oder einer Kombination von beidem - wobei die Verwendung von Programmen verbreiteter und in den derzeit hergestellten Systemen auch günstiger ist - abgeschlossen. "Erkennung" bedeutet in diesem Zusammenhang die Umwandlung von Signalen, die der optischen Erscheinung von Zeichen entsprechen, in eine Code-Darstellung dieser Zeichen. Normalerweise wird man als Code ASCII wählen, da dieser in Programme importiert, übermittelt oder sonst auf herkömmliche Weise weiterverarbeitet werden kann. Es gibt jedoch keinen prinzipiellen Grund, nicht einen anderen Code als ASCII zu verwenden. Der Einfachheit halber wird der Code im folgenden als ASCII bezeichnet, ausserdem wird "Umsetzung" synonym mit Erkennung verwendet.

Das im folgenden angegebene System kann mit einer Vielzahl verschiedener im Handel erhältlicher Scanner und mit zu diesen kompatiblen Programmen arbeiten. Ausserdem ist das Resultat der Zeichenumsetzung im Speicher für selektive Verarbeitung, die weiter unten im einzelnen beschrieben werden wird, zugänglich. Zu diesem Zweck und aus anderen, im folgenden erläuterten Gründen ist eine Steuerkarte 18 vorgesehen. Die Steuerkarte 18 ist eine modulare Karte, die in einen Steckplatz eines PC eingesteckt oder als separater Modul gebraucht werden kann. Eine Karte, die für den fraglichen Zweck geeignet ist, ist die Modular-4, hergestellt und verkauft durch Sorcus Computer GmbH, Tullastrasse 19, D-6900 Heidelberg. In Fig. 1 ist die Steuerkarte der Uebersichtlichkeit der Darstellung halber als separater Modul dargestellt. Unter anderem enthält sie einen Multitasking-Controller, mindestens einen zentralen Prozessor (CPU) mit mindestens der Leistungsfähigkeit eines Prozessors, wie sie in PCs eingebaut sind, und RAM-Speicher. Dem Prozessor auf der Steuerkarte 18 werden die elektrischen Signale zugeleitet, zu welchen die Kompressionskarte die Signale des Scanners 12 verarbeitet.

Die Kompressionskarte 27 steht mit dem Controller 18 und einem Computer 30, der in Fig. 1 als Personal Computer (PC) dargestellt ist, über einen Bus 32 in Verbindung. Der PC hat wenigstens ein Diskettenlaufwerk und vorzugsweise eine Festplatte. Der PC 30 ist ausserdem mit einem Monitor 34, der vorzugsweise eine ganze Seite eines der Dokumente 10 auf ein Mal darstellen kann, ausgerüstet. Ausserdem ist er mit einer Tastatur 36 und vorzugsweise mit weiteren Eingabe- und Steuergeräten wie einer Maus 38 und einem Mikrophon 40 für mündliche Eingaben ausgestattet sowie mit Programmen, die den PC zur Verarbeitung kombinierter Maus-Eingaben und mündlicher Eingaben oder Tastatur-Eingaben und mündlicher Steuerbefehle geeignet macht. Zur Kennzeichnung von zur Umsetzung oder Speicherung vorgesehenen Teilen eines Dokuments kann auch die Verwendung eines Lichtstifts oder eines auf Berührung ansprechenden Bildschirms sehr nützlich sein. Ein horizontaler Flachbildschirm ist für die Kombination von mündlicher Eingabe mit Berührungssteuerung besonders geeignet.

Die Steuerkarte 18 ist ausserdem mit mindestens einem Massenspeicher - Speichereinheiten 22, 23, 24, 25 sind in Fig. 1 dargestellt - verbunden. Als Massenspeicher kommen z. B. Magnetplatte, Digitalmagnetband oder optische Speicherplatten wie WORMs (write once read many times) in Frage, wobei die Auswahl aufgrund des erwarteten Speicherbedarfs, der Häufigkeit und Art des Zugriffs und anderer Faktoren wie Kosten getroffen wird. Vorzugsweise werden WORMs für permanente Speicherung von Bildern, insbesondere von nicht in Textform vorliegender Information, deren Umsetzung in ASCII-Code nicht möglich ist, verwendet. Auch die Verwendung einer löschbaren optischen Speicherplatte wie der INSPIRE von Alphatronics, USA, ist möglich.

Eine Digitalkamera 28 kann als alternatives Eingabegerät vorgesehen und mit der Steuerkarte 18 verbunden sein. Sie kann parallel zum Scanner 12 verwendet werden, sodass digitalisierte Bildinformation sowohl vom Scanner als auch von der Kamera geliefert werden, jedoch liegt der Nutzen der Kamera vor allem in der Möglichkeit, digitalisierte Bilder von Dokumenten herzustellen, die bereits etwa auf Mikrofilm oder Mikrofiche gespeichert vorliegen sowie bei der Aufnahme von Dokumenten, die zu gross sind, um dem Scanner zugeführt zu werden oder die andere Eigenschaften haben, die ihre Abtastung durch den verwendeten Scanner, insbesondere wenn ein Durchlauf des Papiers durch denselben erforderlich ist, erschweren wie Steifigkeit oder An- und Ueberklebungen.

Der PC 30 und die Steuerkarte 18 sind beide mit Umsetzungsprogrammen 42 zur Umsetzung von Bildsignalen in ASCII-Code versehen. Obwohl für diese Umsetzung auch der Prozessor des PC herangezogen werden kann, wird dieser vorzugsweise für die Darstellung und visuell-manuelle Selektion einschliesslich der Darstellung des digitalisierten Bildes und des Resultats der Umsetzung in Code verwendet. Es ist daher die Steuerkarte 18, die vorzugsweise für die Umsetzung selber benutzt wird und die diese Funktion unter anderen im Multitasking-Betrieb ausführt. Natürlich muss sie dazu ausreichend mit RAM versehen sein.

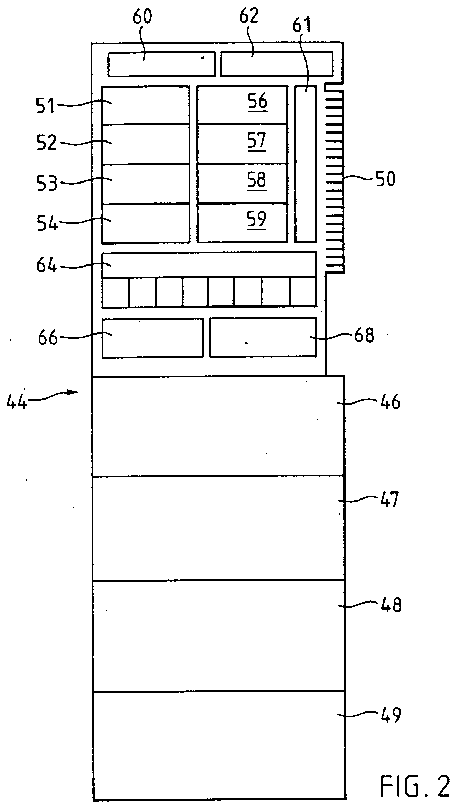

Bevor die Funktion des Systems gemäss Fig. 1 erläutert wird, wird auf Fig. 2 eingegangen, welche den Aufbau der oben erwähnten als Steuerkarte 18 geeigneten Modular-4-Karte darstellt. Modular-4 wurde ursprünglich für die Aufbereitung von Ausgangssignalen von Messgeräten wie Wandlern für die Verarbeitung in einem PC im Zusammenhang mit Prozesssteuerung und anderen Aufgaben, wie sie in Labors und allgemein im naturwissenschaftlichen Bereich anfallen, entwickelt. Z. B. können mehrere Wandler oder Sensoren zur Messung von Parametern wie Temperatur, Druck, Rotationsgeschwindigkeit und dergleichen, welche analoge oder digitale elektrische Signale abgeben, mit der Modular-4-Karte verbunden sein, die die Signale zusammenfassen, in ein gemeinsames Format umwandeln und in gewünschter Reihenfolge zur Eingabe etwa in ein Tabellenkalkulationsprogramm oder eine Datenbank oder beides zwecks Speicherung und Analyse an einen PC weiterleiten kann.

Obwohl die Karte eher für technische Zwecke als für die Verarbeitung von Dokumenten entwickelt wurde, ist sie für diesen Zweck sehr gut geeignet. Die Modular-4-Karte 44 ist für die Aufnahme von vier Einsteckmoduln 46, 47, 48 und 49 vorbereitet, von denen jeder aus der folgenden Reihe unterschiedlicher Typen ausgewählt werden kann: programmierbarer Vorverstärkermodul mit 16 analogen Eingängen, 100 kHz Abtastrate und 12 Bit Auflösung (d. h. Auflösung in 4096 Stufen); Modul mit vier analogen Strom- oder Spannungsausgängen mit 12 Bit Auflösung; digitales Schnittstellenmodul mit 40 digitalen Ein- oder Ausgängen sowie vier Eingängen für Trigger- oder Taktsignale; Bus-Schnittstelle z. B. für einen IEC-Bus, ein zur Verwendung mit programmierbaren Messgeräten gebräuchliches Bussystem, oder eine serielle Schnittstelle für Daten. Ein integrierter Stecker 50 dient der Verbindung mit weiterem Gerät über eine Normbuchse. Die Karte trägt eine CPU 51, ein Multitasking-Betriebssystem 52 in EPROM, das bis zu 256 Tasks bewältigen kann, einen RAM-Baustein 53 mit einer Kapazität von 64 kB, ausbaubar bis 1 MB und einen Interrupt-Controller 54. Vier Zeitschaltungen 56, 57, 58 und 59 sind ebenfalls vorgesehen, von denen zwei als Taktgeber benutzt werden können. Am Ende der Karte sind eine parallelle Drucker-Schnittstelle 60 und eine serielle RS-232-Schnittstelle angebracht sowie, neben dem Stecker 50, eine PC-Schnittstelle 61. Eine weitere Schnittstelle 64 mit Eingängen für acht externe Triggersignale schliesst an eine SP-Bus-Schnittstelle und eine batteriegepufferte Uhr 68 an. Der SP-Bus ist ein internes Bussystem der Modular-4-Karte, über das die Kommunikation zwischen den Modulen und dem eingebauten Prozessor 51 läuft.

Beim beschriebenen System kann eine Modular-4-Karte im PC-Gehäuse eingebaut sein (das die Karte ausschliesslich mit Strom für ihre Steuerfunktionen versorgt), wenn ein Einsteckplatz verfügbar ist, und die Karte wird im Normalfall mit Moduln ausgerüstet sein, unter denen sich mindestens eine serielle Datenschnittstelle und eine digitale Schnittstelle für Steuerzwecke befindet. Es ist jedoch darauf hinzuweisen, dass ohne weiteres zwei oder mehr Modular-4-Karten gleichzeitig benutzt werden können. Falls daher zusätzliche Rechenkapazität für eine grosse Zahl von angeschlossenen Geräten oder ein besonders rechenintensives Umsetzprogramm benötigt wird, kann die Zahl der Karten erhöht werden, da sie für den Einsatz zu mehreren entwickelt wurden.

Die Verbindung der Steuerkarte 18 und der Kompressions-Karte 27 im erfindungsgemässen System ermöglicht die Echtzeitverarbeitung von Daten zur Eingabe derselben in eine Bilddatenbank.

Erfindungsgemäss ist die (bzw. jede) Steuerkarte 18 mit in EPROM gespeicherten Steuerprogrammen versehen einschliesslich einer Auswahl von Treibern, die die Anpassung des Systems an jede einer Vielzahl von Scanner- und Programmvarianten ermöglichen. Im Rahmen des Installationsprogramms wird der Benutzer aufgefordert, den verwendeten Scanner und das Umsetzprogramm, mit denen das System ausgestattet ist, aus einer Liste von Möglichkeiten auszuwählen. Dies ermöglicht dem System die Wahl der geeigneten Treiber, die bis zu einer allfälligen Aenderung der Ausrüstung und neuerlichem Aufruf des Installationsprogramms verwendet werden. Die Verwendung einer Steuerkarte 18 zur Steuerung der Scannerfunktion und des Umsetzprogramms ermöglicht die Verwendung vom Benutzer eingebrachter Umsetzprogramme sowie eines beliebig unter einer Anzahl von Möglichkeiten ausgewählten Scanners, ohne dass das Umsetzprogramm speziell an das System angepasst und modifiziert werden müsste. Zeichenerkennungsprogramme sehen im allgemeinen keine Möglichkeit manuell gesteuerter selektiver Datenumwandlung vor, sodass der Benutzer eine Reihe von Schritten ausführen muss, um zu den gewünschten Resultaten zu gelangen. Er muss etwa von der Bilddarstellung auf Zeichendarstellung umschalten, um eine Auswahl aus den bereits umgesetzten Zeichen zu treffen und dann zur Bilddarstellung zurückzukehren. Dadurch geht erheblich Zeit verloren und die Bearbeitungszeit erhöht sich. Daher wird beim vorliegenden System vorgeschlagen, Bild und in Code umgesetzten Text in einem einzigen Speicher abzulegen oder unter miteinander verknüpften Adressen in zwei Speicherbereichen oder Dateien, wobei in beiden Fällen Zugriff und Manipulationen in jedem Bereich ohne Verlassen des anderen möglich sind.

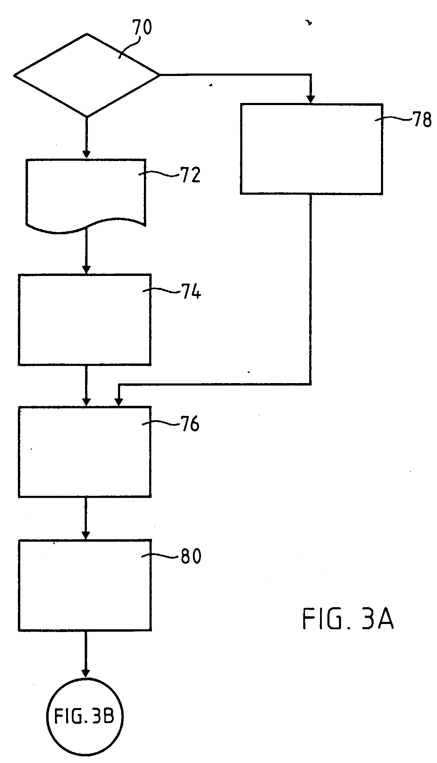

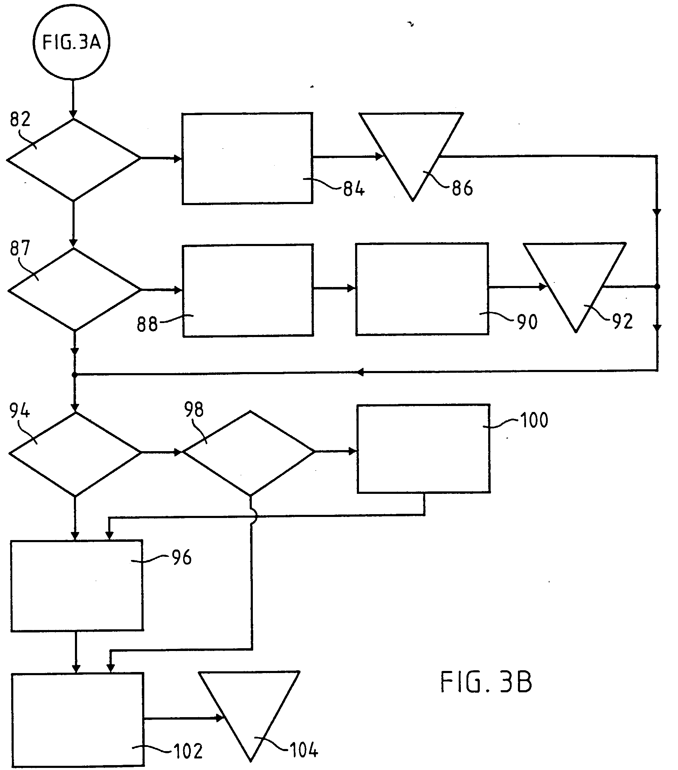

Das erfindungsgemässe Verfahren und System bietet die Voraussetzung für die Speicherung eines vollständigen Abbilds eines (oder jedes) Dokuments oder auch ausgewählter Bildteile, d. h. es können als Bild vom Benutzer aus dem auf dem Bildschirm dargestellten vollständigen Abbild des Dokuments ausgewählte Teile sowie als Auszüge aus den in ASCII umgesetzten Daten jene Teile, die in codierter Form gespeichert werden sollen, in der Datenbank, d. h. dem Massenspeicher, abgelegt werden, je nach den Bedürfnissen des Benutzers. Verfahren, die mittels des Systems ausgeführt werden können, sind im Flussdiagramm der Figuren 3A und 3B illustriert. Eine für den Gebrauch des erfindungsgemässen Systems zum Speichern vollständiger Abbilder aller Dokumente typische Vorgehensweise beginnt mit der Vorbereitung 70 der Quelldokumente, falls eine solche erforderlich ist und sequentieller Zuführung 72 der Dokumente zum Scanner 12, sei es manuell oder mittels des Zuführgerätes 14.Die Quelldokumente werden bei 74 optisch abgetastet und die dabei erzeugten Signale der Steuerkarte 18 zur Aufbereitung 76 zugeführt, worauf die Dokumente in der Ablage 20 abgelegt werden. Alle Abläufe in Scanner und Zuführgerät werden von der Steuerkarte 18 überwacht und gesteuert. Uebergrosse oder sonst aus dem Rahmen fallende Dokumente werden in 78 mittels einer Kamera digitalisiert.

In der Reihenfolge, in der sie empfangen und aufbereitet werden, zeilenweise, werden die aufbereiteten digitalen Bildsignale bei 80 einem Zwischenspeicher 21 zugeführt, der ein Teil der Steuerkarte 18 oder des PC sein kann und dort zwischengespeichert und zugleich auf dem Monitor 34 dargestellt. Es muss sichergestellt sein, dass zwischen den Speicherbereichen, in denen Code und seine als Bild vorliegenden Quelle gespeichert sind, eine Verknüpfung besteht. Eine besonders vorteilhafte Methode, mit der das erreicht werden kann, besteht darin, den in ASCII-Code umgesetzten Wörtern und den Bilddaten verknüpfte Speicherbereiche in unterschiedlichen Sektoren zuzuweisen. Wenn eine 1:1 - Beziehung besteht, so kann das System aus der Lage der codierten Wörter im Speicher sofort die Lage des Quellbildes ableiten. Daher wird das Bild in einer Weise gespeichert, die man sich als (bild)zeilenweise Darstellung des Bildes selbst vorstellen kann, während in einem weiteren Zwischenspeicher oder einem anderen Sektor des Zwischenspeichers der durch Umsetzung des Bildes erzeugte ASCII-Code auch in zeilenweiser Anordnung gespeichert ist, sodass zwischen Bilddaten (bit map) und Code-Daten eine systematische Verknüpfung besteht. Wenn das Bild dargestellt ist, kann der Benutzer Teile zu separater Weiterverarbeitung bestimmen, indem er jeweils Anfang und Ende durch mündliche Eingaben oder Berührung des Schirms oder eine Kombination von beiden mit besonderen Symbolen markiert oder auf eine andere Weise ein Wort oder einen Satz heraushebt. Die Kennzeichnung von Bildteilen, die weiterverarbeitet werden sollen, zieht wegen der Verknüpfung der Speicherbereiche automatisch eine Kennzeichnung der entsprechenden Gruppe von ASCII-Zeichen nach sich, d. h. die Adresse wenigstens des Anfangs jedes Bildteils entspricht der Adresse des Anfangs des durch Umsetzung dieses Teils erzeugten Codes, allerdings im anderen Speichersektor.

Da Bilddaten eines Textes und Code-Daten des gleichen Textes unterschiedlich viel Speicherplatz benötigen, sind die Daten in demjenigen Sektor des Zwischenspeichers, der Code-Daten enthält, weniger dicht gepackt, aber das ist ohne Bedeutung.

Die Speicherroutine kann so angelegt sein, dass sie Code und Bild auf der Basis mittlerer Zeichengrösse und mittleren Zeichenabstands verknüpft (d. h. auf der Basis von Zeichen pro Zoll). Falls dann jedoch der bearbeitete Text grösser oder kleiner ist, wird in einem Lernmodus eine Anpassung durchgeführt, wobei ein Ausschnitt des Bildes ausgehend von gespeicherten digitalisierten Bildsignalen und der selbe Ausschnitt ausgehend vom ASCII-Code untereinander auf dem Monitor dargestellt werden. Wenn die Längen differieren, wird der Abstand der ASCII-Zeichen geändert, bis sie übereinstimmen. Dadurch wird eine Korrekturinformation gewonnen, die dann auf das ganze Dokument oder den ganzen Satz von Dokumenten angewandt wird. Dieses "Lernen" kann manuell oder automatisch durchgeführt werden, die entsprechende Routine entspricht der für Blocksatz in einem Textsystem gebrauchten. Jedes derartige für einen bestimmten Zeichensatz "gelernte" Konversionsprogramm kann für späteren Gebrauch im Zusammenhang mit dem gleichen Zeichensatz gespeichert werden.

Die Verknüpfung der Speicherbereiche ist wichtig für die Echtzeitverarbeitung. Ohne Rücksicht auf die Geschwindigkeit der Umsetzung kann der Benutzer mit der Kennzeichnung von Bildteilen gemäss dem erfindungsgemässen Verfahren beginnen, sobald Zeilen eines abgetasteten Dokuments in Bildform auf dem Monitor erscheinen. Er braucht die vollständige Umsetzung nicht abzuwarten. Er kann, der Umsetzung vorauseilend, die umgesetzten Teile kennzeichnen, die er auszuwählen wünscht. Das gilt auch für Bildteile. Echtzeitverarbeitung wird vereinfacht, wenn Bilddaten (nicht umsetzbare Daten wie sehr grosse Ueberschriften oder Illustrationen) in beiden Teilen des Zwischenspeichers gespeichert werden, d. h. im ASCII-Teil ebenso wie im "Bild"-Teil, sodass es nicht notwendig ist, nacheinander auf beide Teile, d. h. beide Dateien zuzugreifen, wenn die Information gebraucht wird.

Im Sinne eines ökonomischen Umgangs mit Speicherplatz ist es allerdings vorzuziehen, dass bei "permanenter" Speicherung im Massenspeicher der Datenbank die nicht umsetzbaren Daten wie Illustrationen in einem Bildsektor und ASCII oder anderer Code in einem eigenen Sektor abgelegt werden. Zusammen mit dem Code von umgesetztem Begleittext wird dann ein Hinweis auf die Existenz einer Illustration o. dgl. sowie eine Identifikation (z. B. ihre Adresse) abgelegt, sodass die Teile mit geringem Aufwand wieder zusammengesetzt werden können. Es kann dabei eine Deskriptortechnik verwendet werden.

An dieser Stelle wird nun eine Entscheidung 82 darüber getroffen, wie weit Text in Bildform zu speichern ist. Es kann ein Bildausschnitt oder auch mehrere dazu bestimmt werden, in Bildform gespeichert zu werden oder auch das Abbild der gesamten Seite. In vielen Fällen ist es wünschenswert, dass nur Teile des Dokuments in Bildform gespeichert werden, da für die Speicherung einer A4-Seite in Bildform (bit map) typischerweise 50 000 Bytes benötigt werden, selbst wenn das Bild vorgängig komprimiert wurde, während die Speicherung des selben Dokuments in Textform nur etwa 2000 Bytes erfordert.

Sollen alle Dokumente vollständig gespeichert werden, so muss entschieden werden (84), welche Teile des Texts in Code umgesetzt und in dieser Form (im Massenspeicher der Datenbank) gespeichert werden sollen. Es gibt einige mögliche Gründe dafür, den Text umzusetzen und getrennt vom Bild zu speichern, etwa das Erfordernis, dass der Text in editierbarer Form vorliegt. Ein wesentlicher Grund ist die Möglichkeit der Identifikation und Wiederauffindung der gespeicherten Bilder. Gespeicherte Bilder mit dem Computer zu suchen ist sehr schwierig, während ASCII-Text sehr schnell und leicht gesucht werden kann. Wenn daher besonders wichtige und signifikante Wörter aus dem Bild zur Umsetzung und Speicherung in Code-Form ausgewählt werden, und wenn gespeicherter Code mit dem gespeicherten Bild, aus dem der umgesetzte Text gewählt wurde, verknüpft werden kann, dann kann im in Code-Form vorliegenden Text gesucht und das Bild sehr rasch wiederaufgefunden werden. Diese "wichtigen, signifikanten Wörter" werden natürlich vom gegebenen Zusammenhang abhängen, jedoch bieten sich der Name eines Briefautors, der Betreff des Briefes und sein Datum bei Schriftstücken aus Korrespondenz als logische Wahl an.

Eine alternative Methode, die in einigen Zusammenhängen besonders nützlich ist, ist die Zuordnung eines Codesymbols zu jedem dargestellten Dokument. Dieses Symbol kann eine alphanumerische Zeichenkette sein. Es kann leicht danach gesucht und so die Seite aufgefunden werden. Ein derartiges Symbol kann in Schritt 84 über die Tastatur eingegeben werden. Eine weitere Alternative wäre es, die umgesetzten ausgewählten Wörter mit dem Bild als "Deskriptoren" zu speichern, wobei nach den Wörtern gesucht werden kann. Wenn das Bild direkt auf das ASCII-Wort folgt, so wird mit dem letzteren auch das erstere aufgefunden. Die Bildsignale werden in 86 zusammen mit dem ASCII-Code abgelegt.

Wenn nicht jedes Bild zur Gänze gespeichert werden soll (87), müssen in 88 Teile ausgewählt und zur Speicherung bestimmt werden. Das Vorgehen bei der Bestimmung der Teile (88) ist im wesentlichen das gleiche wie bei der Bestimmung von Teilen zur Umsetzung, wenn auch die Kriterien wohl unterschiedlich sind und der Befehl sich notwendig unterscheiden muss. 90 entspricht 84.

In jedem Fall wird, wenn die Entscheidung getroffen ist, Befehl zur Speicherung der ausgewählten Information gegeben und die das Bild darstellenden Signale werden in 92 einer der Massenspeichereinheiten 22 - 25 der Datenbank zugeleitet, um dort in Bildform in einem vorbestimmten Format abgelegt zu werden.

Im System ist auch die Möglichkeit vorgesehen, die umsetzbaren Teile des ganzen Dokuments in 94 ausgehend vom als Resultat einer Umsetzung vorliegenden Code wiederaufzufinden und darzustellen und (98) entweder den ganzen dem Dokument entsprechenden Code in 96 zur Speicherung in der Datenbank zu bestimmen oder ausgewählte Teile davon in 100. Der wiederaufgefundene und dargestellte Code kann dann in 102 editiert und in 104 abgelegt werden.

Im Sinne des Konzepts der "konsistenten Speicherung" ist es wichtig, dass jene Teile eines Bildes, die nicht umsetzbar sind (Bilder, Entwürfe, übergrosse Zeichen u. dgl.) an identifizierten Speicherstellen abgelegt werden. Das ist für die Wiederauffindung von Dokumenten in einer Form, die der ursprünglichen Form möglichst nahe kommt, oder für die Reproduktion und Bearbeitung gespeicherter Information zur Veröffentlichung (wie etwa beim sogenannten "desk top publishing") als "clip art" zusammen mit Text aus in Code umgesetzter Information, der zu diesem Zweck editiert werden kann, besonders bedeutsam. Wenn eine Mischung aus umsetzbarer und nicht umsetzbarer (Grafik) Information auf einer Seite vorliegt, muss die Speicherung von beiden derart verknüpft werden, dass das Bild als in eine bestimmte freie Stelle im Text passend gekennzeichnet ist, sodass der Text und das Bild nach dem Editieren aus ASCII- bzw. Bildspeicher abgerufen und etwa für den Ausdruck mittels eines Laserdruckers verknüpft werden können. Sie können auch in "gemischter Anordnung" von codierten und Bilddaten im Massenspeicher abgelegt sein wie schon oben erwähnt.

Die Auswahl kann manuell mittels einer Tastatur 36, einer Maus oder durch mündliche Eingabe wie in den US-Patenten 4 553 261 und 4 726 065 beschrieben ausgeführt werden. Sie kann auch, insbesondere für "Massendokumente", etwa Formulare, die alle die gleiche Form aufweisen und jeweils an den gleichen Stellen Information tragen, die aufgenommen und verarbeitet werden soll, entsprechend US-Patent 4 553 261 automatisiert werden.

Bei Massendokumenten kann wegen möglicher Schwankungen in der Funktion des Zuführgeräts nicht garantiert werden, dass die Dokumente im Scanner immer exakt gleich positioniert sind. Es ist jedoch ein Referenzpunkt für das Auswahlsystem erforderlich, von dem aus die Lage des ausgewählten Felds genau bestimmt werden kann. Es können zu diesem Zweck vorgängig ein oder mehrere Symbole an vorbestimmten Stellen wie der linken oder rechten oberen Ecke jedes Formulars als Orientierungspunkte aufgedruckt werden. Symbole wie Fadenkreuze oder "+" sind für diesen Zweck geeignet. Besonders wichtig ist dieser Punkt bei Bestellformularen o. dgl., von denen Zahl und Art der Artikel und ähnliche Information jedes Mal zuverlässig abgelesen werden müssen.

Es ist auch möglich, der zum Ablegen bestimmten Information jeweils einen "Deskriptor" zuzuordnen. Der Deskriptor kann aus dem am Bildschirm ausgehend von den Bilddaten dargestellten Dokument vom Benutzer ausgewählt werden. Der ausgewählte Deskriptor wird dann später wie weiter oben beschrieben in der ASCII-Code-Datei gesucht und wiederaufgefunden. Es können auch unabhängig vom Bild zusätzliche Deskriptoren hinzugefügt werden.

## Patentansprüche

1. Verfahren zur mindestens teilweisen Umsetzung eines in digital codierter Form vorliegenden Bildes in digital codierten Text mit Vorbereitung für nachfolgende Speicherung oder Weiterverarbeitung, worin das digital codierte Bild in einem ersten Speicherbereich gespeichert wird, alle oder ausgewählte Teile des Bildes, die Text enthalten, in digital codierten Text umgesetzt werden (80), der codierte Text in einem zweiten Speicherbereich gespeichert wird und zwischenden Addressen des zweiten Speicherbereiches, in welchem digital codierter Text gespeichert ist, und den entsprechenden Adressen des ersten Speicherbereiches, in welchem das diesen Text enthaltende digital codierte Bild gespeichert ist, systematisch eine Verknüpfung hergestellt wird (84, 90), welche die Identifizierung von codiertem Text bzw. codiertem Bild ausgehend vom einen zum anderen wenigstens nach einer Richtung ermöglicht.

2. Verfahren nach Anspruch 1, **dadurch gekennzeichnet, dass** die Verknüpfung zwischen den Adressen der Speicherbereiche eine Identifizierung der Textsequenzen nach den Bildausschnitten, aus denen sie umgesetzt werden, ermöglicht, das Bild auf einem Bildschirm dargestellt wird und Mittel vorhanden sind, mittels derer Bildausschnitte aus demselben ausgewählt werden können.

3. Verfahren nach Anspruch 2, **dadurch gekennzeichnet, dass** nur in den ausgewählten Bildausschnitten enthaltener Text in digital codierten Text umgesetzt wird.

4. Verfahren nach einem der Ansprüche 1 bis 3, **dadurch gekennzeichnet, dass** zwischen den Adressen, unter welchen ein nicht umsetzbarer Bildteil gespeichert ist und denen, unter welchen besagten Teil begleitender Text in umgesetzter Form abgelegt ist, eine Beziehung hergestellt ist, welche die Identifizierung des nicht umsetzbaren Bildteils ausgehend vom umgesetzten Text ermöglicht.

5. Verfahren nach einem der Ansprüche 1 bis 3, **dadurch gekennzeichnet, dass** nicht umsetzbare Bildteile auch im umgesetzten Text enthaltenden Speicherbereich gespeichert werden.

6. Verfahren nach Anspruch 5, **dadurch gekennzeichnet, dass** die nicht umsetzbaren Bildteile im umgesetzten Text enthaltenden Speicherbereich in Teilbereichen abgelegt sind, welche den Teilbereichen, die aus ihnen benachbarten Bildausschnitten umgesetzten Text enthalten, benachbart sind.

7. Verfahren nach einem der Ansprüche 1 bis 6, **dadurch gekennzeichnet, dass** das digital codierte Bild durch vorgängiges Abtasten eines Dokuments mittels eines Scanners oder Aufnahme desselben durch eine Digitalkamera gewonnen wird.

8. Verfahren nach einem der Ansprüche 1 bis 7, **dadurch gekennzeichnet, dass** das digital codierte Bild oder Ausschnitte davon und/oder daraus umgesetzte Textsequenzen in einem Massenspeicher abgelegt werden.

9. Verfahren nach Anspruch 8, **dadurch gekennzeichnet, dass** bei Speicherung eines digital codierten Bildes oder von Ausschnitten daraus und daraus umgesetzten Textsequenzen die Speicherung im Massenspeicher so erfolgt, dass bei einem Rückruf die Verknüpfungen zwischen den Adressen der zugehörigen Speicherbereiche wiederherstellbar sind.

## Claims

1. Method for the at least partial conversion of an image present in digitally coded form into digitally coded text with preparation for the subsequent storage or further processing, in which the digitally coded image is stored in a first memory area, all or selected parts of the image, which contain the text, are converted into digitally coded text (80), the coded text is stored in a second memory area and between the addresses of the second memory area, in which digitally coded text is stored, and the corresponding addresses of the first memory area in which is stored the digitally coded image containing this text, a link is systematically produced (84, 90), which permits the identification of coded text or coded image from one to the other in at least one direction.

2. Method according to claim 1, characterized in that the link between the addresses of the storage areas permits an identification of the text sequences according to image sectors from which they are converted, the image is represented on a screen and means exist by means of which image sectors can be selected therefrom.

3. Method according to claim 2, characterized in that only text contained in the selected image sectors is converted into digitally coded text.

4. Method according to one of the claims 1 to 3, characterized in that between the addresses, under which a non-convertible image part is stored and those, under which text accompanying said part is filed in converted form, a relationship is produced, which permits the identification of the unconvertible image parts based on the converted text.

5. Method according to one of the claims 1 to 3, characterized in that unconvertible image parts are also stored in the memory area containing unconverted text.

6. Method according to claim 5, characterized in that the unconvertible image parts in the memory area containing unconverted text are filed in partial areas adjacent to the partial areas containing text converted from image sectors adjacent thereto.

7. Method according to one of the claims 1 to 6, characterized in that the digitally coded image is obtained by prior scanning of a document by means of a scanner or the recording thereof by a digital camera.

8. Method according to one of the claims 1 to 7, characterized in that the digitally coded image or sectors thereof and/or text sequences converted therefrom are filed in a mass memory.

9. Method according to claim 8, characterized in that in the case of storage of a digitally coded image or sectors thereof and text sequences converted therefrom, storage in the mass memory takes place in such a way that on a recall the links between the addresses of the associated memory areas can be restored.

## Revendications

1. Procédé de transformation au moins partielle d'une image existant sous forme codée numériquement en texte codé numériquement avec préparation pour stockage ou traitement ultérieur, dans lequel l'image codée numériquement est stockée dans une première zone de mémoire, toute les parties de l'image qui contiennent du texte ou certaines de celles-ci sont transformées en texte codé numériquement (80), le texte codé est enregistré dans une deuxième zone de mémoire et il est établi systématiquement, entre les adresses de la deuxième zone de mémoire dans laquelle est enregistré le texte codé numériquement et l'adresse correspondante de la première zone de mémoire dans laquelle l'image codée numériquement contenant ce texte est enregistrée, une association (84, 90) qui permet l'identification du texte codé ou de l'image codée à partir d'un élément à l'autre élément dans au moins un sens.

2. Procédé selon la revendication 1, caractérisé en ce que l'association entre les adresses des emplacements en mémoire permet une identification des séquences de texte selon les parties d'image à partir desquelles elles ont été transformées, l'image est visualisée sur un écran et il existe des moyens grâce auxquels des parties d'image peuvent être sélectionnées dans celle-ci.

3. Procédé selon la revendication 2, caractérisé en ce que seul le texte contenu dans les parties d'image sélectionnées est transformé en texte codé numériquement.

4. Procédé selon l'une ou l'ensemble des revendications 1 à 3, caractérisé en ce qu'il est établi entre les adresses sous lesquelles est enregistrée une partie d'image non transformable et celles sous lesquelles le texte accompagnant ladite partie sous forme transformée est enregistré une relation qui permet l'identification de la partie d'image non transformable à partir du texte transformé.

5. Procédé selon l'une ou l'ensemble des revendications 1 à 3, caractérisé en ce que des parties d'image non transformables sont également enregistrées dans la zone de mémoire contenant du texte transformé.

6. Procédé selon la revendication 5, caractérisé en ce que les parties d'image non transformables sont déposées dans la zone de mémoire contenant du texte transformé dans des zones partielles qui sont voisines des zones partielles contenant le texte transformé à partir de parties d'image qui sont voisines d'elles.

7. Procédé selon l'une ou l'ensemble des revendications 1 à 6, caractérisé en ce que l'image codée numériquement est obtenue par balayage préalable d'un document au moyen d'un scanner ou enregistrement de ce document par une caméra numérique.

8. Procédé selon l'une ou l'ensemble des revendications 1 à 7, caractérisé en ce que l'image codée numériquement ou des parties de celle-ci et/ou des séquences de texte transformées à partir de celles-ci sont déposées dans une mémoire de masse.

9. Procédé selon la revendication 8, caractérisé en ce que lors de l'enregistrement d'une image codée numériquement ou de parties de celle-ci et de séquences de texte transformées à partir de celles-ci, l'enregistrement dans la mémoire de masse est fait de telle sorte que les associations entre les adresses des zones de mémoire correspondantes puissent être rétablies lors d'un rappel.
